# EUROPEAN PATENT APPLICATION

(11) **EP 4 831 843 A1**
(43) Date of publication of application: **28.10.2026**
(21) Application number: 25172363.1
(22) Date of filing: 24.04.2025
(51) Int. Cl.: G06F 21/14, H04L 9/00

(54) **METHOD FOR PROTECTING CRYPTOGRAPHIC KEY MATERIAL**

(71) Applicant: Siemens Aktiengesellschaft, 80333 München (DE)
(72) Inventor: Zwanzger, Johannes, 85579 Neubiberg (DE)
(74) Representative: Siemens Patent Attorneys

(57) **Abstract**

The present disclosure provides a method for protecting cryptographic key material in two or more instances of a source code. The cryptographic key material is obfuscated with differing obfuscation algorithms and/or differing parameters and/or differing source code positions. The method involves preparing an obfuscation tool for individual implementations (100), generating obfuscated implementations I₁, I₂, ..., Iₙ (102), and creating dynamic libraries L₁, L₂, ..., Lₙ (104). During device or application setup, a specific dynamic library Lⱼ is requested (108) and transferred (110) for use in cryptographic operations (112).

## Description

The invention relates to methods for protecting cryptographic key material.

Cryptographic key material plays a crucial role in securing digital communications, data storage, and authentication processes. In many applications, these keys need to be protected against potential attackers who may have full physical and technical access to the device or system running the application. This scenario, known as a whitebox attack model, presents significant challenges for maintaining the confidentiality and integrity of cryptographic keys.

Obfuscation techniques are commonly employed to protect cryptographic keys in whitebox scenarios. These methods typically involve embedding the key as fixed data within an obfuscated cryptographic algorithm implementation. The degree of protection provided depends on the quality of the obfuscation applied. However, traditional approaches often result in the key becoming an inseparable part of the executable code, making it difficult to update or replace individual keys without modifying the entire codebase.

One limitation of existing solutions is the reliance on global keys that are identical across all instances of a device or application. While this approach simplifies code management and distribution, it introduces a single point of failure - if one instance is compromised, all instances using the same global key are potentially vulnerable

Another challenge arises in scenarios where devices or applications require frequent updates or individualized configurations.

It is therefore the object of the present invention to provide a method for protecting cryptographic key material that overcomes one or more of these problems.

This object of the present invention is solved with a method for protecting cryptographic key material with the features contained in claim 1. Advantageous aspects of the invention are contained in the subsequent dependent claims, the following description and the drawing.

In a first aspect, a method for protecting cryptographic key material in two or more instances of a source code is provided. The method includes obfuscating the cryptographic key material with differing obfuscation algorithms and/or differing parameters, preferably mutually differing obfuscation algorithms and/or differing parameters.

In a preferred aspect of the invention, the cryptographic key material is obfuscated in the source code. Preferably, the source code with the obfuscated cryptographic key material is provided. Alternatively and also preferably, the source code with the obfuscated cryptographic key material is compiled and finally provided in compiled form.

This method according to the invention provides enhanced security for cryptographic key material by creating unique obfuscated implementations for each instance of the source code. By using different algorithms, parameters, or code positions for each instance, the method makes it significantly more difficult for an attacker to compromise multiple instances even if one is successfully attacked.

Advantageously, due to the differing obfuscation algorithm and/or the differing parameters, the cryptographic key material would also be located at a differing position within the source code as well. Thus, the source code location cannot easily be located and thus the key material cannot be easily read out or manipulated. This aspect of the method according to the invention further enhances the security of the method.

In another advantageous aspect of the method according to the invention, the differing obfuscation algorithms comprise at least one encryption layer for encapsulating the source code of an application, that is removable when starting the application.

This aspect adds an additional layer of protection by encrypting the entire application, making it more challenging for an attacker to access the underlying code and locate the cryptographic key material.

In another advantageous aspect of the method according to the invention, the cryptographic key material differs, preferably mutually, in the two or more instances. Thus, the two or more instances at the same time differ in the cryptographic key material, and the respective cryptographic key material is difficult to locate in the source code.

In another advantageous aspect of the method according to the invention, the differing obfuscation algorithms comprise at least one source code obfuscation.

Source code obfuscation transforms the code in ways that make it more difficult to understand and reverse-engineer, while maintaining its functionality. This further enhances the protection of the cryptographic key material.

In another advantageous aspect of the method according to the invention, the differing obfuscation algorithms comprise at least one binary obfuscation.

Binary obfuscation operates on the compiled code, providing protection at the machine code level. This makes it more challenging for attackers to analyze the code using disassembly or debugging tools.

In another advantageous aspect of the method according to the invention, at least one of the differing obfuscation algorithms comprise at least one obfuscation of a routine involving random decisions the generated code depends on.

By incorporating random decisions into the obfuscation process, this aspect creates unique implementations that are difficult to predict or replicate, further enhancing the security of the cryptographic key material.

In another advantageous aspect of the method according to the invention, at least one or more or all of the differing obfuscation algorithms are realized involving dynamic libraries.

The use of dynamic libraries allows for flexible and modular implementation of the obfuscated algorithms, potentially enabling easier updates and maintenance of the protected code.

In another advantageous aspect of the method according to the invention, at least one or more or all of the differing obfuscation algorithms are realized involving a static implementation.

Static implementation can provide better performance and make it more difficult for attackers to separate the obfuscated code from the rest of the application.

In another advantageous aspect of the method according to the invention, each of the differing obfuscation algorithms and/or differing parameters and/or differing source code positions is attributed to a specific device and/or application.

This aspect allows for device-specific or application-specific implementations, further increasing the uniqueness of each instance and making large-scale attacks more challenging.

In a further advantageous aspect of the method according to the invention, the obfuscation of the key material involves a device specific parameter.

Preferably, the device specific parameter may be a serial number or information derived from the serial number. In an easy realization, a number derived from the serial number may be added to or subtracted from the cryptographic key material. That way, it would lead to incorrect cryptographic key material in case the code is run on a different device, since then addition or subtracting a number derived from the respective serial number would lead to a different result. That way, the method would in general work. However, when the cryptographic key material would be used, the cryptographic key material would simply not work, since the correct cryptographic key material could not be derived. Other choices for device specific parameters may involve a software configuration of the device, such as a hash value of the software configuration of the device.

In another advantageous aspect of the method according to the invention, the at least one or more or all of the differing obfuscation algorithms and/or differing parameters involve a user-chosen parameter. Also the user-chosen parameter could in principle deliver the cryptographic key material in case the cryptographic key material is stored together with the user-chosen parameter as a sum or as a difference. Then having the knowledge of the user-chosen parameter allows to deduce the cryptographic key material. By incorporating a user-chosen parameter, this aspect allows for additional customization and potentially addresses concerns about the key material being known to the creator of the obfuscated implementation.

In a further advantageous aspect of the method according to the invention, the at least one or more or all of the differing obfuscation algorithms and/or differing parameters involve a device specific information, in particular a serial information, such as a serial number. The binding of the obfuscation algorithm and/or the differing parameter to the device additionally increases the security of the method according to the invention. In particular, the binding of the obfuscation algorithm and/or the differing parameter to the device ensures, that the source code would not work in case it would be simply copied to another device.

In a further advantageous aspect of the method according to the invention, the obfuscation algorithm the user-chosen parameter and/or the device specific information modifies the key material, and preferably symmetrically encrypts the key material. As an illustrative embodiment, the user-chosen parameter and/or the device specific information needs to be added to the key material information contained in the source code, so that deducing the correct key material requires the knowledge of the user-chosen parameter and/or the device specific information.

In this aspect of the invention, the missing knowledge of the user-chosen parameter and/or the device specific information would also result in obtaining a respective key material. However, since in this case the key material would differ from the intended key material, the usage of this key material would lead to malfunction of one, some or all of the functionality of the software.

In another advantageous aspect of the method according to the invention, the method is computer-implemented.

In another advantageous aspect of the method according to the invention, the cryptographic key material comprises one or more encryption and/or decryption keys.

This aspect specifically addresses the protection of encryption and decryption keys, which are critical for maintaining the confidentiality of sensitive data.

In another advantageous aspect of the method according to the invention, the cryptographic key material comprises one or more signature keys.

Protection of signature keys is crucial for maintaining the integrity and authenticity of digital signatures, which are widely used in secure communications and transactions.

In another advantageous aspect of the method according to the invention, the cryptographic key material comprises one or more authentication keys, particularly device authentication keys and/or application authentication keys.

By protecting authentication keys, this aspect enhances the security of device and application authentication processes, which are essential for preventing unauthorized access and ensuring the trustworthiness of connected systems.

In a further aspect of the invention, a method for providing two or more instances of a software artifact, preferably of third parties, with at least one cryptographic key material, is provided, wherein the method for protecting cryptographic key material as described above is applied to source code of the instances of the software artifacts.

Advantageously, in this aspect of the invention, the instances of the software artifact could contain know how or other forms of intellectual property, particularly of the third party. This know-how or other forms of intellectual property are suitably protected with the method according to the invention, since different keys in different instances would not easily locatable in the obfuscated source codes of the instances of the software artifact.

Preferably in this aspect of the invention, a provider of the software artifact is provided with cryptographic provider key material that corresponds to the cryptographic key material.

Advantageously, the cryptographic key material may include one or more decryption keys, wherein the cryptographic provider key material may include one or more encryption keys that correspond the respective one or more decryption keys included in the cryptographic key material.

Alternatively, and also advantageously, the cryptographic key material may include one or more encryption keys, wherein the cryptographic provider key material may include one or more decryption keys that correspond the respective one or more encryption keys included in the cryptographic key material.

The cryptographic key material may be or comprise symmetric key material and/or asymmetric key material.

The cryptographic provider key material may be contained in a library, preferably a dynamic library. The cryptographic key material may likewise be contained in a library, preferably a dynamic library, with the respective instance of the software artifact.

Preferably in invention, the instances of the software artifact are compiled after the method for protecting cryptographic key material is applied. In a second aspect, a program-product and/or device is provided, configured for carrying out the method according to one of the previous aspects.

This aspect enables the practical implementation and deployment of the inventive method in software and/or hardware form, allowing for widespread adoption and use of the enhanced key protection technique.

In a third aspect, a method for authenticating and/or encrypting and/or decrypting and or signing and/or verifying digital signatures is provided. The method includes using and protecting cryptographic key material using a method according to one of the previous aspects and/or a program-product and/or device according to the second aspect.

This aspect demonstrates the practical application of the inventive method in various cryptographic operations, showcasing its versatility and importance in securing a wide range of digital communications and transactions.

In the following, the invention is explained in more detail with the help of the accompanying drawing.

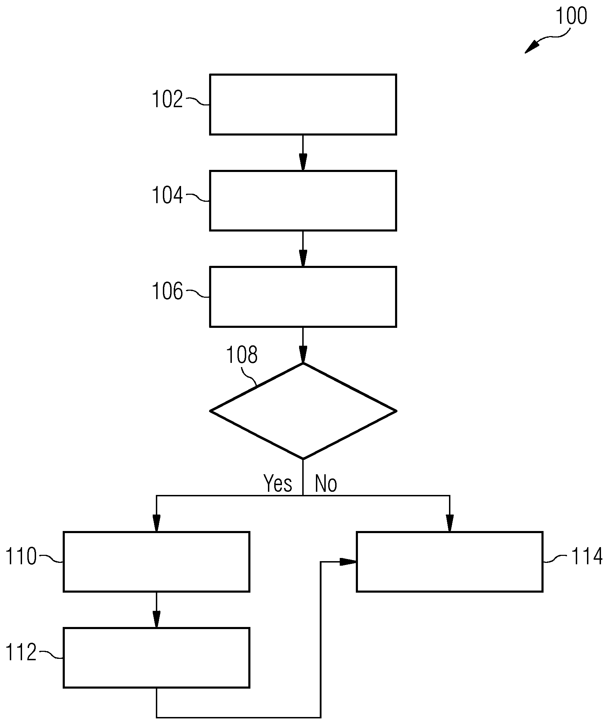

- FIG. 1: illustrates a schematic flowchart for a method of protecting cryptographic key material, according to aspects of the present invention.

Common reference numerals are used throughout the figures to indicate similar features.

The present invention relates to a method for protecting cryptographic key material in two or more instances of a source code. The method involves obfuscating the cryptographic key material using differing obfuscation algorithms, parameters, or source code positions for each instance. This approach enhances security by making it more difficult for potential attackers to extract or compromise the key material across multiple devices or applications.

The method begins with preparing an obfuscation tool capable of generating individual implementations of the cryptographic algorithms in step100. This preparation involves configuring the tool to produce varied and unique obfuscated versions of the same underlying cryptographic functionality.

Next, the method generates multiple obfuscated implementations of the cryptographic algorithms, each incorporating different key material in step102. These implementations are designed to have the same external interfaces but differ significantly in their internal structure and operation.

Following the generation of obfuscated implementations, the method creates dynamic libraries corresponding to each implementation in step 104. These libraries encapsulate the obfuscated code and provide a standardized interface for integration into various applications or devices.

When a specific device or application requires cryptographic capabilities as an example, the method involves requesting and transferring, as step 110, the appropriate dynamic library to that device or application. This step ensures that each instance receives a unique implementation of the cryptographic functionality.

Finally, the transferred dynamic library is used to perform cryptographic operations on the target device or within the application in step 112. This approach allows for device-specific or application-specific cryptographic implementations, enhancing overall security by reducing the impact of a potential compromise of any single instance.

The method can be implemented using a computer system, which manages the obfuscation, generation, and distribution of the cryptographic implementations. Additionally, a program-product can be configured to carry out the steps of this method, providing a software solution for protecting cryptographic key material.

Furthermore, a device can be configured to execute this method, enabling hardware-based implementation of the cryptographic protection scheme. This device may incorporate the necessary components to generate, store, and utilize the obfuscated cryptographic implementations.

By employing this method, the protection of cryptographic key material is enhanced across multiple instances of source code, providing a robust security solution for various applications and devices that rely on cryptographic operations.

The method for protecting cryptographic key material begins with the preparation of an obfuscation tool in step 100. This obfuscation tool is configured to generate individual implementations of cryptographic algorithms, each incorporating different key material. The tool is designed to create obfuscated implementations I1, I2, ..., In for corresponding keys K1, K2, ..., Kn.

The obfuscation tool employs various techniques to create diverse implementations. One approach involves obfuscating the cryptographic key material with differing parameters. This may include varying obfuscation algorithm parameters used in the implementation.

Due to the differing obfuscation algorithms and obfuscation parameters, the cryptographic key material is located at differing source code positions. This altering of the location of key-related code within the overall implementation constitutes additional variability between instances.

The obfuscation tool also applies differing obfuscation algorithms to obfuscate the cryptographic key material. This may involve using different encryption schemes, hash functions, or other cryptographic primitives to protect the key material within each implementation.

As an example, the obfuscation tool is specifically designed to obfuscate a given algorithm with numerous random-dependent decisions that significantly influence the generated code. This approach results in highly individualized implementations, even when starting from the same base algorithm and key material.

The preparation of the obfuscation tool involves configuring these various obfuscation techniques and ensuring that the tool can generate implementations with consistent external interfaces despite their internal differences. This consistency in external interfaces is crucial for maintaining compatibility with the broader application or system while providing enhanced security through individualized implementations.

The generation of obfuscated implementations I1, 12, ..., In (102) involves a process that creates multiple unique versions of the same underlying cryptographic functionality. Each implementation incorporates different key material while maintaining identical external interfaces.

The obfuscation process employs various techniques to create diverse implementations. One such technique is source code obfuscation, which transforms the original source code into an equivalent but more complex and less readable form. This may involve renaming variables, restructuring control flow, or inserting dummy code.

Another technique used is binary obfuscation, which operates on the compiled executable code. Binary obfuscation can involve instruction substitution, code reordering, or the insertion of opaque predicates to make reverse engineering more challenging.

A particularly effective obfuscation method involves the use of routines with random decisions that influence the generated code. This approach introduces non-deterministic elements into the obfuscation process, resulting in implementations that differ significantly even when obfuscating the same input multiple times.

The cryptographic key material protected by these obfuscated implementations can include various types of keys. Encryption and decryption keys are commonly protected using this method, ensuring that the confidentiality of data remains intact even if one implementation is compromised.

In addition, the obfuscation involves modifying the key material, in the depicted embodiment with adding both a serial number of the respective device, the respective obfuscation algorithm is applied to and additionally adding a user-chosen parameter to the key material. Thus, a user must always provide the corresponding user-chosen parameter and also the correct serial number of the respective device is needed to correctly deduce the respective correct key material.

In this embodiment, a missing knowledge of the user-chosen parameter and/or the device specific information would result in obtaining an incorrect respective key material. However, since in this case the key material would differ from the intended key material, the usage of this key material would lead to malfunction of one, some or all of the functionality of the software.

Signature keys are another type of cryptographic key material that can be safeguarded using this obfuscation technique. These keys are crucial for verifying the authenticity and integrity of digital signatures, making their protection essential in many security-critical applications.

Authentication keys, including device authentication keys and application authentication keys, can also be protected using this obfuscation method. These keys play a vital role in verifying the identity of devices or applications in various security protocols.

By generating multiple obfuscated implementations, each with its unique internal structure but identical external interface, the method creates a diverse set of cryptographic implementations. This diversity enhances security by making it more difficult for potential attackers to exploit vulnerabilities across multiple instances of the cryptographic functionality.

Following the generation of obfuscated implementations in step 104, dynamic libraries L1, L2, ..., Ln are created in step 106 based on these implementations. Each dynamic library encapsulates an obfuscated implementation of the cryptographic functionality, providing a standardized interface for integration into various applications or devices.

The dynamic libraries can be generated using standard compilation and linking tools, ensuring that the obfuscated code is properly packaged and can be loaded at runtime by the target application or device. These libraries may be created either "on demand" when requested by a specific device or application as depicted as step 110, or "in stock" in advance of any requests.

In an alternative embodiment, instead of creating dynamic libraries, complete executable applications Aj are generated. In this case, the code for the actual application is statically linked against the obfuscated implementation Ij. This approach offers certain advantages, such as making it more difficult for an attacker to isolate and extract the cryptographic functionality from the overall application.

The choice between dynamic libraries and statically linked executables depends on the specific requirements of the target system and the desired level of integration between the cryptographic functionality and the main application code.

When using dynamic libraries, the cryptographic functionality can be updated or replaced independently of the main application, providing flexibility in maintenance and updates. On the other hand, statically linked executables offer a more tightly integrated solution, potentially improving performance and making it more challenging for attackers to analyze or modify the cryptographic components in isolation.

In both cases, whether using dynamic libraries or statically linked executables, the underlying principle of using individually obfuscated implementations for each instance remains the same, providing enhanced protection for the cryptographic key material.

During the setup of a device or application X, a request is made for a specific dynamic library Lj as step 110. This library contains the obfuscated implementation of the cryptographic functionality tailored for the particular device or application.

The process of requesting and transferring the dynamic library Lj to the device or application X in step 110 can be accomplished through various methods. In an example, the transfer occurs online, leveraging the increasing connectivity of devices. This online transfer allows for efficient and secure distribution of the library to the target device or application.

In another example, alternative transmission methods are employed for transferring the dynamic library Lj. These methods may include the use of data carriers, such as a USB stick, which can be physically transported to the device or application location. This approach may be preferred in scenarios where network connectivity is limited or when additional security measures are required for the transfer process.

Once the dynamic library Lj is transferred to the device or application X in step 112, it is integrated into the system and used for cryptographic operations in step114. The integration process may involve loading the library into memory, initializing any necessary data structures, and establishing the appropriate function calls to utilize the obfuscated cryptographic implementation.

The method has been described above for the case of a device set-up. However, in step 108 it is checked, whether a device set-up is necessary YES or not NO. In case the device set-up is not necessary, the method may directly go to step 114 of using the libraries Lj for cryptographic applications.

By using the transferred dynamic library Lj for cryptographic operations in step 114, the device or application benefits from a unique, obfuscated implementation of the cryptographic functionality. This individualized approach enhances security by making it more challenging for potential attackers to exploit vulnerabilities across multiple devices or applications, even if they manage to compromise one instance.

The embodiment described above can be implemented on an application platform for providing application code/s of two or more instances of an application of third parties with one or more encryption keys to one or more end user/s. In this embodiment, the application code is the respective source code, and each individually obfuscated source code of an instance is represented by each combination of one of the instances and one end user. In further embodiments, the respective application codes of the instances may be the compiled versions of the respective source codes, such as machine codes instances.

## Claims

1. Method for protecting cryptographic key material in two or more instances of a source code, in which the cryptographic key material is obfuscated with, preferably mutually, differing obfuscation algorithms and/or differing parameters (100, 102).

2. Method according to the previous claim, wherein the differing obfuscation algorithms comprise at least one encryption layer for encapsulating the source code of an application, that is removable when starting the application (102)
and/or wherein the cryptographic key material differs, preferably mutually, in the two or more instances.

3. Method according to one of the previous claims, wherein the differing obfuscation algorithms comprise at least one source code obfuscation (102) and/or comprise at least one binary obfuscation (102) and/or comprise at least one obfuscation of a routine involving random decisions the generated code depends on (102).

4. Method according to one of the previous claims, wherein at least one or more or all of the differing obfuscation algorithms are realized involving dynamic libraries (104) and/or wherein at least one or more or all of the differing obfuscation algorithms are realized involving a static implementation (102).

5. Method according to one of the previous claims, wherein each of the differing obfuscation algorithms and/or differing parameters is attributed to a specific device and/or application (108, 110) and/or wherein the at least one or more or all of the differing obfuscation algorithms and/or differing parameters involve a user-chosen parameter (102).

6. Method according to one of the previous claims, wherein the at least one or more or all of the differing obfuscation algorithms and/or differing parameters involve a device specific information, in particular a serial information, such as a serial number.

7. Method according to claim 5 or 6, wherein in the obfuscation algorithm the user-chosen parameter (102) and/or the device specific information modifies the key material, in particular symmetrically encrypts the key material.

8. Method according to one of the previous claims, which is computer-implemented (100, 102, 104, 106, 108, 110, 112).

9. Method according to one of the previous claims, wherein the cryptographic key material comprises one or more encryption and/or decryption keys (102) and/or wherein the cryptographic key material comprises one or more signature keys (102).

10. Method according to one of the previous claims, wherein the cryptographic key material comprises one or more authentication keys, particularly device authentication keys and/or application authentication keys (102).

11. Method for providing two or more instances of a software artifact, preferably of third parties, with at least one cryptographic key material, wherein the method for protecting cryptographic key material according to one of the previous claims is applied to the source codes of the instances of the software artifact.

12. Method according to the previous claim, wherein a provider of the software artifact is provided with cryptographic provider key material that corresponds to the cryptographic key material.

13. Method according to one of the previous claims, wherein the instances are compiled after the method for protecting cryptographic key material is applied.

14. Program-product and/or device, configured for carrying out the method according to one of the previous claims (100, 102, 104, 106, 108, 110, 112).

15. Method for authenticating and/or encrypting and/or decrypting and or signing and/or verifying digital signatures, wherein cryptographic key material is used and protected using a method according to one of the claims 1 to 13 and/or a program-product and/or device according to claim 14 (112).
